# EUROPÄISCHE PATENTSCHRIFT

(11) **EP 2 123 379 B1**
(45) Veröffentlichungstag und Bekanntmachung des Hinweises auf die Patenterteilung: **15.08.2012**
(21) Anmeldenummer: 08009425.3
(22) Anmeldetag: 22.05.2008
(51) Int. Cl.: B23B 29/04, B23B 31/00, B23Q 5/04, B23Q 5/20

(54) **Fräs- und Drehmaschine**
Milling and turning machine
Fraiseuse et tour

(43) Veröffentlichungstag der Anmeldung: 25.11.2009
(73) Patentinhaber: SHW Werkzeugmaschinen GmbH, 73433 Aalen (DE)
(72) Erfinder: Maier, Franz, 73431 Aalen (DE)
(74) Vertreter: Zirkel, Herbert

(56) Entgegenhaltungen:
- EP-A- 0 485 607
- EP-A2- 0 334 191
- DE-A1- 3 504 905
- DE-A1- 19 858 801
- DE-A1-102006 027 247
- DE-A1-102006 056 546
- US-A- 5 595 391

## Beschreibung

Die Erfindung betrifft eine Fräs- und Drehmaschine für die Bearbeitung von Werkstücken, mit einem verschiebbaren Spindelstock mit wenigstens einer darin drehbar gelagerten Antriebswelle, einem an dessen vorderen Ende angeordneten Fräskopf mit einer darin laufenden, mit der Antriebswelle verbundenen Arbeitsspindel, die an ihrem vorderen Ende als Werkzeugaufnahme ausgestaltet ist, und mit einem drehbar gestalteten Arbeitstisch zur Aufnahme des zu bearbeitenden Werkstücks. Die Werkzeugaufnahme in der Arbeitsspindel nimmt Aufnahmekonen auf, die Bearbeitungswerkzeuge tragen. Um eine definierte Position des Aufnahmekonus in der Arbeitsspindel zu gewährleisten, sind Aufnahmekonen bekannt, die einen Paßring aufweisen, der an der Front der Arbeitsspindel zur Anlage kommt und so den Einzug des Aufnahmekonus in die Arbeitspindel begrenzt (s. z.B. EP 0 334 191):

Solche Arbeitsmaschinen sind üblicherweise Fräsmaschinen, d.h. Maschinen, bei denen ein feststehendes Werkstück mit sich drehenden Werkzeugen bearbeitet wird. Die Bearbeitung kann sich dabei auf die Oberfläche des Werkstücks beschränken oder aber auch in das Werkstück eindringen. Im letzteren Fall wird die Bearbeitung nicht als Fräsen, sondern als Bohren bezeichnet.

Zur Vereinfachung der Bearbeitung ist es aber wünschenswert, bei einer einzigen Aufspannung des Werkstücks auch dessen Oberflächenbearbeitung durch Drehen zu ermöglichen. Eine derartige Bearbeitung beschränkt sich auf Werkstücke mit mindestens teilweise kreisrunden Querschnitt und erfordert neben einem sich relativ schnell drehenden Arbeitstisch einen feststehenden sog. Drehstahl. Die Schneidkante des Drehstahls wird in diesem Fall gegen die Oberfläche des sich drehenden Werkstücks bewegt und nimmt von diesem im Umlauf Späne ab.

Der Drehstahl muß dazu unverdrehbar eingespannt sein. Da die Arbeitsspindel aber in erster Linie dafür vorgesehen ist, eine Bearbeitung mittels eines sich drehenden Werkzeuges zu ermöglichen, stellt sich das Problem der Arretierung der Arbeitsspindel bei dem Einsatz eines Drehstahls. Dies kann in einfacher Weise dadurch geschehen, daß der die Antriebswelle antreibende Motor angehalten wird. Derartige Motoren sind in Maschinen heutiger Ausführung geeignet, auch im Stillstand gehalten zu werden. Befindet sich zwischen Motor und Arbeitsspindel kein Getriebe oder eine andere Motor, Antriebswelle und Arbeitsspindel mit Spiel verbindende Einrichtung, können auch keine Relativbewegungen zwischen Motor und Arbeitsspindel auftreten, so daß der eingesetzte Drehstahl feststeht.

Während der Dreharbeiten wirken jedoch auf den Drehstahl hohe Kräfte ein, die ihn einseitig belasten und in Schwingungen versetzen können. Werden diese Kräfte über den Drehstahl, den Aufnahmekonus und die Werkzeugaufnahme in die Arbeitsspindel eingeleitet, besteht die Gefahr, daß die Lager für die Arbeitsspindel beschädigt oder mindestens einseitig verformt werden. Die Maschine wäre dann für die Ausführung hochqualitativer Fräsarbeiten nur noch beschränkt geeignet.

Es sind Ausführungen derartiger Maschinen bekannt, in denen bei entsprechenden Arbeitsvorgängen die Arbeitsspindel durch geeignete Vorrichtungen zusätzlich von außen fest eingespannt wird. Dies erfordert aber einen erheblichen Mehraufwand in Konstruktion und Herstellung der Maschine. Der Fräskopf, in dem sich die Arbeitsspindel befindet und der vor und während der Bearbeitung in verschiedene Richtungen geschwenkt wird, wird nicht unerheblich schwerer mit entsprechenden Belastungen für Gleitbahnen oder Traglager und Motoren.

Es sind auch Überlegungen bekannt, eine gesonderte Einspannvorrichtung für den Drehstahl in dem Spindelgehäuse anzubringen. Auch dieses erfordert jedoch einen entsprechend höheren Aufwand. Zusätzlich stellt sich das Problem des Abstands zwischen Drehstahl und Mitte der Arbeitsspindel, der Umrechnungen in den Maschinenprogrammen erfordert, wenn zwischen Fräs- und Dreharbeiten gewechselt werden soll.

Ein Lösungsweg für die vorstehenden Schwierigkeiten findet sich in der europäischen Patentschrift EP 0 215 182. Sie zeigt als wesentlichen Bestandteil der Erfindung einen Aufnahmekonus, in dessen Innenraum ein Drehstahlhalter mit einem Drehstahl drehbar gegenüber dem Aufnahmekonus und der Arbeitsspindel gelagert ist. Der Drehstahlhalter kann mit einem feststehenden Teil der Maschine verbunden werden. Es ist so möglich, bei feststehendem Drehstahl die Arbeitsspindel während des Drehens umlaufen zu lassen. Die Lager der Arbeitsspindel werden auf diese Weise nicht einseitig belastet.

Allerdings hat die Ausführung gemäß der EP 0 215 182 Nachteile. Der Aufnahmekonus weist eine komplizierte Konstruktion auf, ist aufwendig in der Herstellung und schwerer als herkömmliche Konen. Die Arretierung des Drehstahls gegenüber der Spindel erfordert entsprechende Einrichtungen am Fräskopf. Zudem wird die Möglichkeit ausgeschlossen, durch das Zentrum der Spindel und des Aufnahmekonus z.B. Kühlmittel oder Luft zuzuführen.

Eine weitere Lösung des Problems bietet die deutsche Offenlegungsschrift DE 198 58 801 die eine Fräs-und Drehmachine nach dem Oberbegriff von Anspruch 1 offenbart. Sie weist paarweise unterschiedliche Werkzeughalter auf, je nachdem, ob rotative (Fräser) oder starre (Drehstähle) Werkzeuge eingesetzt werden sollen. Die Werkzeughalter werden dabei entweder im Spindelträger frei beweglich oder an diesem verriegelt ausgestaltet. Nachteilig in der dortigen Ausführung ist einerseits, daß eine völlige Freistellung der Arbeitsspindel von Kräften, die auf das Werkzeug einwirken, bei starren Werkzeugen nicht erreicht wird, andererseits, daß die Verwendung der beschriebenen Werkzeughalterpaare nur bei solchen der Typenreihe HSK möglich ist, weil nur bei diesen der Durchmesser der Einsatzkonen (in der DE 198 58 801 mit "10" bezeichnet) paarweise identisch ist, und schließlich, daß beim Einsatz von automatischen Werkzeugwechslern die jeweils unterschiedlichen Durchmesser der Werkzeughalter zusätzliche Abläufe erfordern.

### Beschreibung der Erfindung

Die Merkmale der Erfindung ergeben sich aus Anspruch 1. In den weiteren Ansprüchen sind zusätzliche verbessernde und/oder ergänzende Merkmale beschrieben.

Die Ausführung gemäß der vorliegenden Erfindung soll die vorstehend geschilderten Nachteile beseitigen. Sie ist zudem in verschiedenen weiteren Punkten vorteilhaft.

der Aufnahmekonus für Drehwerkzeuge wird bei stehender Arbeitsspindel mittels der in der Arbeitsspindel vorhandenen Festhalteeinrichtungen zwar am Fräskopf festgehalten steht, auch mit der Arbeitsspindel in seinem vorderen Teil über einen Paßring in metallischer Verbindung ist in seinem hinteren Teil aber freigedreht, so daß er in diesem Bereich mit den Innenwänden der Arbeitsspindel nicht in Berührung kommt. Ein Kontakt des mittleren Bereichs des Aufnahmekonus mit der Arbeitsspindel besteht lediglich aus einem abdichtenden O-Ring 10, der keine Kräfte überträgt. Auf diese Weise werden Kräfte, die auf den Drehstahl und damit auf den Aufnahmekonus einwirken, von der Arbeitsspindel ferngehalten. Die Lager der Arbeitsspindel bleiben unbelastet.

Zur Arretierung am Fräskopf trägt der Aufnahmekonus in seinem vorderen Bereich eine Basisplatte, die sich mit mindestens drei, vorzugsweise vier, Stützbeinen gegen den Fräskopf abstützt und damit auf diesem in festgelegten Positionen festgehalten wird. Die Stützbeine haben eine solche Länge, daß zwischen Basisplatte und Fräskopf ein ausreichender Freiraum entsteht, in den der Greifer eines Werkzeugwechslers einfahren kann. An seinem vorderen Ende weist der Aufnahmekonus eine Schnittstelle für die verschiedenen handelsüblichen Formen von Bearbeitungswerkzeugen für Dreharbeiten auf. Der Aufnahmekonus kann entlang seiner Achse hohlgebohrt sein. Durch die Bohrung lassen sich aus der Arbeitsspindel Kühlschmieremulsion, Druckluft oder Öl-Aerosol aus Minimalmengenschmiersystemen dem Bearbeitungswerkzeug beziehungsweise dem zu bearbeitenden Werkstück zuführen.

In einer weiteren vorteilhaften Ausgestaltung ist die Basisplatte glockenförmig gestaltet. An ihrem hinteren Rand trägt sie eine Planverzahnung, die in eine entsprechende Gegenverzahnung am Fräskopf eingreift. Die Vorteile dieser Ausführung liegen darin, daß die tragende Basis vergrößert und versteift wird. Der Kontakt der Zahnflanken führt zu einer zusätzlichen Dämpfung von Schwingungen. Es wird damit der Einsatz auch großer und schwerer Werkzeuge ermöglicht. Die Glocke bildet zudem eine Schutzkappe über der Werkzeugaufnahme. Allerdings ist hier der Einsatz eines Werkzeugwechslers nicht möglich. Der Aufnahmekonus muß z.B. in einem Pick-Up, d.h. einem außerhalb der Maschine angeordneten festen Lagerplatz, abgelegt werden, von wo ihn die Maschine abholen kann.

Im folgenden seien an den Abbildungen Fig.1 bis Fig.5 die Einzelheiten der Erfindung erläutert. Fig. 1 zeigt dabei einen Schnitt in Längsrichtung durch Fräskopf, Arbeitsspindel und eingesetzten Aufnahmekonus mit Basisplatte, Fig. 2 die Basisplatte in einer Ausführung mit vier Armen in Draufsicht, Fig. 3 einen Schnitt in Längsrichtung durch Spindelstock, Arbeitsspindel und eingesetzten Aufnahmekonus mit glockenförmiger Basis, Fig. 4 die glockenförmige Basis in Seitenansicht und Fig. 5 die glockenförmige Basis von der Rückseite mit Blick auf die Planverzahnung.

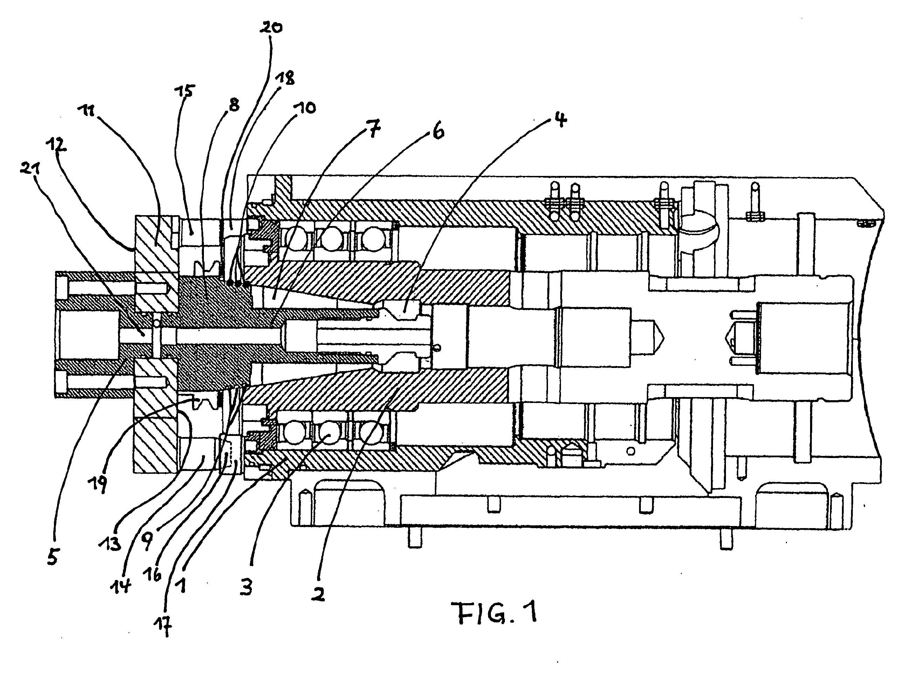

In Fig.1 befindet sich innerhalb des Fräskopfs 1 die Arbeitsspindel 2. Sie ist gegenüber dem Fräskopf 1 mittels der Rollenlager 3 drehbar gelagert. In ihrem Inneren enthält sie die nicht näher dargestellte Festhaltevorrichtung 4 für den Aufnahmekonus 5. Der Aufnahmekonus 5 ist in seinem hinteren Teil 6 zylindrisch geformt, so das zwischen ihm und der Öffnung der Arbeitsspindel 2 der Freiraum 7 besteht. Im mittleren, teilweise konisch verlaufenden, Teil 8 weist der Aufnahmekonus 5 mehrere umlaufende Nuten 9 auf, in denen sich O-Ringe 10 befinden. Nur der letzte dieser-O-Ringe 10 steht in Kontakt mit der Innenfläche der Arbeitsspindel 2. Der innere Steg der letzten Nut 9 ist etwas verkürzt, so daß zwischen seiner Außenfläche und der Innenfläche der Arbeitsspindel 2 ein geringer Abstand besteht, da ihn der O-Ring 10 auch bei fest eingezogenem Aufnahmekonus 5 überragt.

Die Basisplatte 11 ist mit dem Aufnahmekonus 5 ungefähr in dessen Mitte fest verbunden. Auf ihrer von der Maschine abgewandten Vorderseite 12 trägt sie die Schnittstelle zu den einzusetzenden Drehstählen. Diese kann verschieden gestaltet sein, je nach den Erfordernissen, die die Drehstahlausführungen stellen. Die dargestellte Basisplatte 11 hat in der gezeigten Ausführung vier seitlich abragende Arme. Dreiarmige oder aber auch mehrarmige Gestaltungen sind ebenso möglich. Auf den der Maschine zugewandten rückseitigen Flächen der Arme 13 sind vier Stützbeine 14 und 15 befestigt, von denen in Fig. 1 je eines zu sehen sind. Je zwei Stützbeine 14 sind an ihrem unteren Ende konisch geformt und greifen in eine entsprechende Ausnehmung 16 der gegenüberliegenden, am Fräskopf 1 befestigten Stützplatte 17 ein. Die beiden anderen Stützbeine 15 haben plane Oberflächen, die an den planen Oberflächen der ihnen gegenüberliegenden Stützplatten 18 anliegen. Der Körper das Aufnahmekonus 5 trägt unterhalb der Basisplatte 11 einen umlaufenden Ring mit konischer Nut 19, in die der Greifer eines Werkzeugwechslers eingreifen kann. Auf der Innenseite des Rings 19, also der Maschine zugewandt, befindet sich ein Paßring 20. Seine Dicke ist so abgestimmt, daß beim Einzug des Aufnahmekonus 5 in den Innenraum der Arbeitsspindel 2 einerseits der Aufnahmekonus 5 auf dem Fräskopf 1 und der Arbeitsspindel festgeklemmt wird, andererseits verhindert wird, daß der Aufnahmekonus 5 zu weit in die Arbeitsspindel 2 eingezogen wird und damit in stärkere metallische Verbindung zur Arbeitsspindel 2 kommt. Dabei erfolgt die Abstimmung der Paßsituation in der Weise, daß eine leichte Überbestimmung eintritt. Die konischen Enden der Stützbeine 14 gelangen geringfügig früher in Kontakt mit ihren Gegenflächen in der Ausnehmung 16 als die Plananlage des Paßrings 20 auf der Gegenfläche der Arbeitsspindel 2 eintritt. Der weitere Anzug bis zur Plananlage erzeugt vorteilhafterweise eine Versteifung der Verbindung zwischen Aufnahmekonus 5 und Fräskopf 1.

Sichtbar ist in Fig. 1 auch, daß der Aufnahmekonus in seiner Längsachse eine durchgehende Bohrung 21 aufweisen kann. Durch sie läßt sich aus der Arbeitsspindel 2, wie dargestellt, Kühlschmieremulsion, Druckluft oder das Aerosol der Minimalmengenschmierung der Arbeitsstelle zuführen.

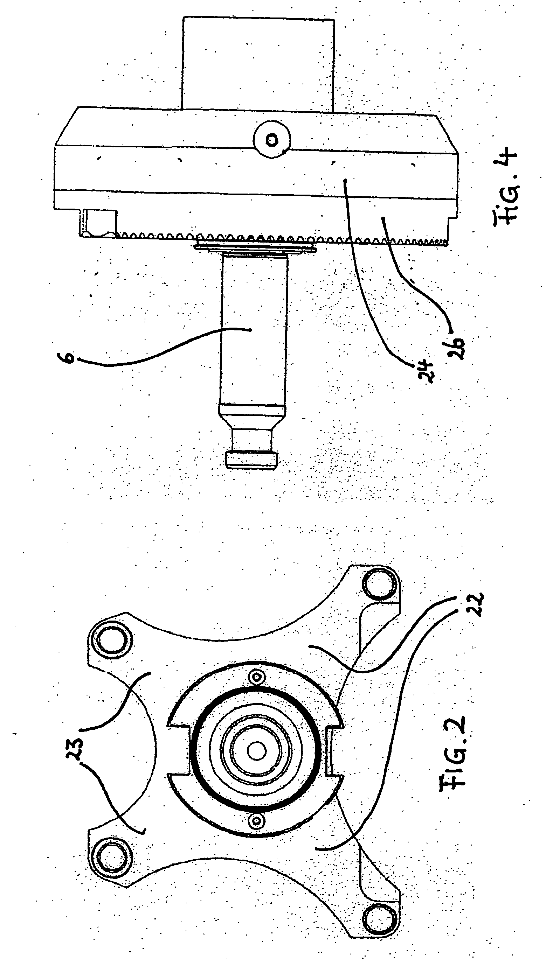

Aus der Draufsicht auf die Basisplatte 11 in **Fig. 2** läßt sich deren Gestalt ersehen. Sie weist hier vier nach außen ragende Arme 22 bzw. 23 auf, die auf der dem Blick abgewandten Fläche die Stützbeine 14 und 15 tragen. Wie ersichtlich, sind die Arme nicht gleich lang. Die beiden einander benachbarten Arme 22 sind länger als die Arme 23. Dies ist erforderlich, um zwischen ihnen einen ausreichenden Freiraum für den Eingriff des Greifers des Werkzeugwechslers zu schaffen.

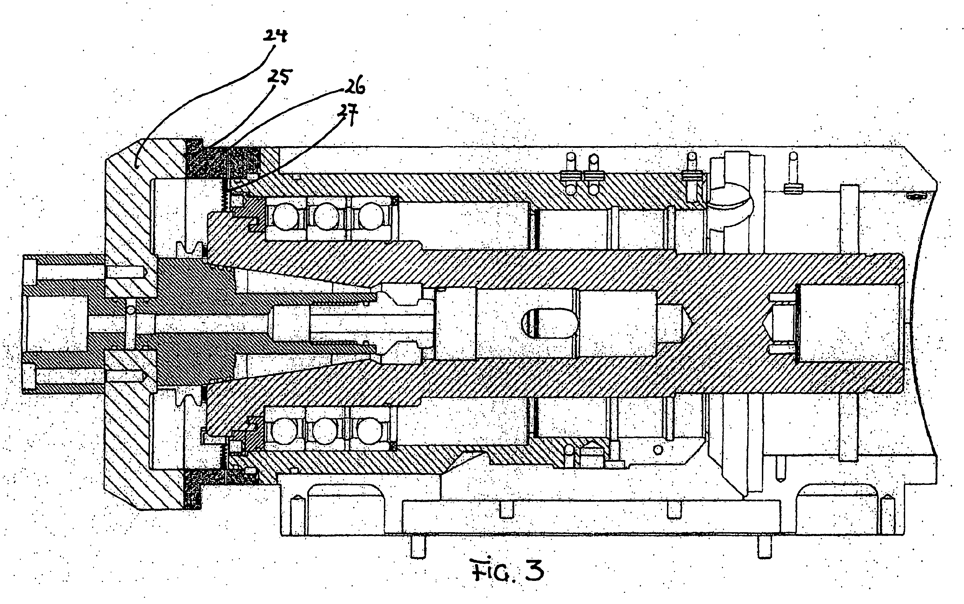

Die in **Fig. 3** dargestellte Ausführung unterscheidet sich von der in **Fig. 1** nur dadurch, daß an die Stelle der Basisplatte 11 die glockenförmige Basis, im folgenden als Basisglocke 24 bezeichnet, getreten ist. Sie trägt an ihrer rückseitigen, der Maschine zugewandten Fläche 25 einen Zahnring 26 mit Planverzahnung. Zwangsläufig trägt die gegenüberliegende Fläche des Fräskopfs 1 die Gegenverzahnung 27. Auch hier findet eine Überbestimmung der Paßsituation in der Weise statt, daß die Flanken der Zähne der Verzahnung geringfügig früher in Kontakt zueinander kommen als die Plananlage an den Paßring 19 eintritt. Durch die Vervielfachung der Anlageflächen und die Vergrößerung der Masse gegenüber der Basisplatte erhöht sich das Dämpfungsmaß des Gesamtobjekts Aufnahmekonus; bei der Bearbeitung auftretende Schwingungen des Drehstahls werden stärker abgefangen.

Die Seitenansicht der Basisglocke 23 in **Fig. 4** zeigt, daß ein seitlicher Zugriff zum Zentralkörper des Aufnahmekonus durch einen Werkzeugwechsler nicht möglich ist, daß die Vorderfront des Fräskopfs 1 und der Arbeitsspindel 2 aber bei dieser Ausführung wesentlich besser geschützt als in der allgemein üblichen Bauweise der Werkzeugaufnahmen.

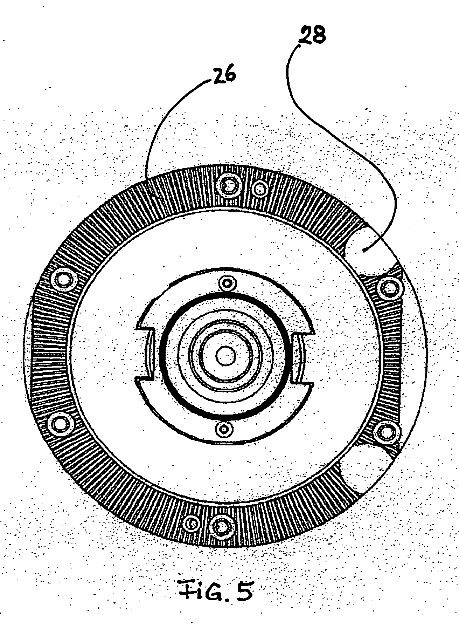

In **Fig. 5** ist eine Ausführung der Basisglocke 24 für den Fall zu sehen, daß an derselben Maschine sowohl Aufnahmekonen mit Basisplatte 11 als auch mit Basisglocke 24 eingesetzt werden sollen. In diesem Falle muß die Frontfläche des Fräskopfs 1 neben dem Ring der Planverzahnung 27 u.a. auch die Stützplatten 17 aufweisen. Diese befinden sich jedoch zwangsläufig an Stellen, an denen auch der Ring der Planverzahnung verläuft. Er muß deshalb an diesen Stellen, gekennzeichnet mit 28, ausgeschnitten werden. Der Einsatz der beiden Ausführungen des Aufnahmekonus an einer Maschine ist dann ohne weiteres möglich. Eine Verschlechterung der Funktionsweise der Basisglocke ist damit nicht verbunden.

Es versteht sich im übrigen, daß die Ausführung des zylindrischen Teils des Aufnahmekonus 5 in allen Figuren nur beispielhaft ist. Er kann ohne weiteres und ohne Nachteile für die Erfindung so gestaltet werden, wie die bekannten genormten Aufnahmevorrichtungen in Arbeitsspindeln es erfordern, insbesondere also auch für innere anstelle der äußeren Klemmung vorgesehen sein.

### Liste der Bezugszeichen

- 1: Fräskopf
- 2: Arbeitsspindel
- 3: Rollenlager
- 4: Festhaltevorrichtung
- 5: Aufnahmekonus
- 6: Hinterer Teil des Aufnahmekonus
- 7: Freiraum
- 8: Mittlerer Teil des Aufnahmekonus
- 9: Ringnuten
- 10: O-Ringe
- 11: Basisplatte
- 12: Vorderseite der Basisplatte
- 13: Rückseite der Arme der Basisplatte
- 14: Stützbein
- 15: Stützbein
- 16: Ausnehmung in der Stützplatte 17
- 17: Stützplatte
- 18: Stützplatte
- 19: Ring mit konischer Nut
- 20: Paßring
- 21: Axialbohrung
- 22: Arm der Basisplatte
- 23: Arm der Basisplatte
- 24: Basisglocke
- 25: Rückseitige Fläche der Basisglocke
- 26: Zahnring
- 27: Gegenverzahnung
- 28: Durchbohrung des Zahnrings

## Patentansprüche

1. Fräs-und Drehmaschine für die Bearbeitung von Werkstücken mit einem feststehenden und drehbar ausgestalteten Arbeitstisch zur Aufnahme des zu bearbeitenden Werkstücks sowie wenigstens einer in einem Fräskopf (1) drehbar gelagerten Arbeitsspindel (2) und einem darin eingespannten Aufnahmekonus (5) mit einem Werkzeug, der an seinem hinteren, in die Arbeitsspindel (2) eingeführten Ende durch die in der Arbeitsspindel (2) angeordnete Festhalteeinrichtung gehalten wird und in seinem Mittelteil mittels der Einzugskraft der Festhalteinrichtung am Fräskopf (1) festgeklemmt ist,
**dadurch gekennzeichnet, daß**
der Aufnahmekonus (5) im übrigen mit der Arbeitsspindel (2) nur über einen Paßring (20) in metallischer Verbindung steht und an seinem Mittelteil mit Ringnuten (9) versehen ist, in der sich O-Ringe (10) befinden, wobei der äußere Steg der letzten Ringnut so verkürzt ist, daß er mit der Innenwand der Arbeitsspindel (2) nicht in Kontakt kommt, wenn die O-Ringe an der Innenwand anliegen.

2. Fräs- und Drehmaschine gemäß Anspruch 1),
**dadurch gekennzeichnet, daß**
der Aufnahmekonus (5) in seinem hinteren Bereich (6) zylindrisch gestaltet ist, in seinem mittleren Bereich teilweise konisch verläuft und in seinem vorderen Bereich die Schnittstelleneinrichtung für die Aufnahme von Bearbeitungswerkzeugen trägt.

3. Fräs- und Drehmaschine gemäß Ansprüchen 1) und 2),
**dadurch gekennzeichnet, daß**
der Aufnahmekonus (5) zwischen dem mittleren und dem vorderen Bereich mit einer Basisplatte (11) fest verbunden ist, von der mindestens drei nach außen ragende Arme (22 bzw. 23) abgehen, die auf ihrer der Maschine zugewandten Rückseite zylindrische geformte Stützbeine (14 bzw. 15) tragen.

4. Fräs- und Drehmaschine gemäß Ansprüchen 1) und 2),
**dadurch gekennzeichnet, daß**
auf der Frontseite des Fräskopfs (1), den Stützbeinen (14 bzw. 15) des Aufnahmekonus (5) gegenüber, mindestens drei Stützplatten (17 bzw. 18) angeordnet sind, die bei Einführung des Aufnahmekonus (5) in die Arbeitsspindel (2) mit den Stützbeinen (14 bzw. 15) in Kontakt treten.

5. Fräs - und Drehmaschine gemäß Ansprüchen 1) bis 4),
**dadurch gekennzeichnet, daß**
die Stützbeine (14) an ihrem freien Ende konisch geformt sind und die ihnen gegenüberstehenden Stützplatten (17) eine konisch nach innen verlaufende Ausnehmung (16) aufweisen, in die das konische Ende der Stützbeine (14) beim Festklemmen des Aufnahmekonus (5) eintritt, sowie
daß die Stützbeine (15) ebenso wie die ihnen gegenüberstehenden Stützplatten (18) an ihrem freien Ende eine ebene Fläche haben.

6. Fräs- und Drehmaschine gemäß Ansprüchen 1), 2) und 3),
**dadurch gekennzeichnet, daß**
sich auf dem mittleren Bereich des Aufnahmekonus (5), im Abstand zu der Basisplatte (11), ein Ring mit konischer Nut (19) und auf dessen der Maschine zugewandten Seite der Paßring (20) befinden.

7. Fräs- und Drehmaschine gemäß Ansprüchen 1) bis 4) und 5),
**dadurch gekennzeichnet, daß**
die Dicke des Paßrings (20) und der Winkel der Konen der Stützbeine (14) mit deren Achse so passend zueinander gewählt sind, daß beim Einzug des Aufnahmekonus (5) in die Arbeitsspindel (2) der Kontakt zwischen den konischen Flächen der Stützbeine (14) und der Ausnehmungen (16) der Stützplatten (17) sowie der ebenen Flächen am Ende der Stützbeine (15) und der Stützplatten (18) kurzfristig früher eintritt als der Kontakt des Paßrings (20) mit der gegenüberliegenden Fläche der Arbeitsspindel (2).

8. Fräs- und Drehmaschine gemäß Ansprüchen 1) bis 3),
**dadurch gekennzeichnet, daß**
der Aufnahmekonus (5) anstelle der Basisplatte (11) eine Basisglocke (24) besitzt, die an ihrer rückseitigen, der Maschine zugewandten Fläche (25) einen Zahnring (26) trägt, der mit einer Planverzahnung versehen ist, und die gegenüberliegende Fläche des Fräskopfs (1) die Gegenverzahnung (27) aufweist.

9. Fräs- und Drehmaschine gemäß Ansprüchen 1), 2) und 8),
**dadurch gekennzeichnet, daß**
die Dicke des Paßrings (20) und des Zahnrings (26) so passend zueinander gewählt sind, daß der Kontakt zwischen den Planverzahnungen auf dem Zahnring (26) und dem Fräskopf (27) kurzfristig früher eintritt als der Kontakt des Paßrings (20) mit der gegenüberliegenden Fläche der Arbeitsspindel (2).

10. Fräs- und Drehmaschine Ansprüchen 1), 2) und 8),
**dadurch gekennzeichnet, daß**
der Zahnring (26) und die ihn tragende Basisglocke (24) an den Stellen durchgehende Bohrungen (28) aufweisen, an denen sich an der gegenüberliegenden Frontfläche des Fräskopfs (1) die Stützplatten (17) befinden.

11. Fräs- und Drehmaschine gemäß den vorstehenden Ansprüchen,
**dadurch gekennzeichnet, daß**
der Aufnahmekonus (5) in seiner Längsachse durchgehend durchbohrt ist und daß die Bohrung (21) am ihrem einen Ende mit der Längsbohrung der Arbeitsspindel, an ihrem anderen Ende mit Bohrungen in der Schnittstelle zu dem Bearbeitungswerkzeug in durchgängiger Verbindung steht.

## Claims

1. Milling and turning machine for the machining of work pieces having a fixed and rotatable work bench for receiving the work piece to be machined and having at least one work spindle (2) rotatably mounted in a milling head (1) and at least one receiving cone (5) fixed therein having a tool which is held on the rear end which is inserted into the work spindle (2) by means of a holding device arranged in the work spindle (2) and in the central part thereof is rigidly fastened to the milling head (1) by means of the draw-in force of the holding device,
**characterised in that**
the receiving cone (5) is otherwise in metallic connection with the work spindle (2) only by means of an adapter ring (20) and is provided in its central part with an annular groove (9), in which o-rings (10) are located, the outer web of the final ring groove being shortened such that it does not come into contact with the inner wall of the work spindle (2) when the o-rings abut the inner wall.

2. Milling and turning machine in accordance with claim 1),
**characterised in that**
the lower region (6) of the receiving cone (5) is cylindrical, the middle region thereof is partially conical and the front region thereof supports the interface device for receiving the machining tools.

3. Milling and turning machine in accordance with claim 1) or claim 2),
**characterised in that**
the receiving cone (5) is rigidly connected between the central and front regions by means of a base plate (11), from which the at least three outwardly projecting arms (22 and 23) extend, which arms support the cylindrical support legs (14 and 15) on the side facing away from the machine.

4. Milling and turning machine in accordance with claim 1) or claim 2),
**characterised in that**
on the front side of the milling head (1), at least three support plates (17 and 18) are arranged opposite the support legs (14 and 15) of the receiving cone (5), which support plates contact the support legs (14 and 15) when the receiving cone (5) is inserted into the work spindle (2).

5. Milling and turning machine in accordance with any one of claims 1) to 4), **characterised in that**
the support legs (14) are conical on the free end thereof and the opposing support plates (17) have an inwardly extending conical recess (16), into which the conical end of the support legs (14) enters when the receiving cone (5) is clamped, and **in that** the support legs (15) and the opposing support plates (18) have flat surfaces on the free ends.

6. Milling and turning machine in accordance with any one of claims 1) to 3), **characterised in that**
a ring with a conical groove (19) is located on the central region of the receiving cone (5) spaced from the base plate (11), and the adapter ring (20) is located on the side of said groove remote from the machine.

7. Milling and turning machine in accordance with any one of claims 1) to 4) or claim 5), **characterised in that**
the thickness of the adapter ring (20) and the angle of the cones of the support legs to the axel (14) is selected such that when the receiving cone (5) is inserted into the work spindle (2), contact between the conical surfaces of the support legs (14) and the recesses (16) of the support plate (17) and the flat surfaces on the end of the support legs (15) and the support plate (18) occurs slightly before the contact between the adapter ring (20) and the opposing surface of the work spindle (2).

8. Milling and turning machine in accordance with any one of claims 1) to 3),
**characterised in that**
the receiving cone (5) has a base flange (24) in place of the base plate (11), which base flange has a toothed ring (26) on the rear surface (25) which faces the machine, which toothed ring is provided with crown gearing, and the opposing surface of the milling head (1) has the counter gearing (27).

9. Milling and turning machine in accordance with any one of claim 1), claim 2) and claim 8),
**characterised in that**
the thickness of the adapter ring (20) and the toothed ring (26) are selected to fit one another such that the contact between the crown gearing on the toothed ring (26) and the milling head (27) occurs slightly before the contact between the adapter ring (20) and the opposing surface of the work spindle (2).

10. Milling and turning machine in accordance with any one of claim 1), claim 2) and claim 8),
**characterised in that**
the toothed ring (26) and the base flange (24) which supports said toothed ring has bores (28) which go through the points, on which the support plates (17) on the opposing front surfaces of the milling head (1) are located.

11. Milling and turning machine in accordance with any one of the preceding claims,
**characterised in that**
the receiving cone (5) is completely pierced in its longitudinal axis, and **in that** one end of the bore (21) is in continuous connection with the longitudinal bore of the work spindle, and the other end of said bore is in continuous connection with bores in the interface of the machining tool.

## Revendications

1. Machine de fraisage et de tournage pour l'usinage de pièces avec un banc de travail fixe et orientable destiné à la réception des pièces à usiner, ainsi qu'au moins une broche de travail (2) montée à rotation dans une tête de fraisage (1) et un cône de réception (5) serré dans ladite broche de travail (2) avec un outil dont la partie arrière insérée dans la broche (2) est fixée par le dispositif de serrage installé dans cette dernière, et la partie centrale est fixée sous l'effet de la force de traction du dispositif de serrage au niveau de la tête de fraisage (1),
**caractérisée en ce que**
le cône de réception (5) n'est en liaison métallique avec la broche de travail (2) que par le biais d'une bague d'adaptation (20). Sur sa partie centrale, le cône de réception présente des rainures annulaires (9) où sont placés des joints toriques (10). La nervure externe de la dernière rainure annulaire est raccourcie de manière à ce qu'elle n'entre pas en contact avec la paroi intérieure de la broche de travail (2) lorsque les joints toriques sont appuyés contre la paroi intérieure.

2. Machine de fraisage et de tournage selon la revendication 1), **caractérisée en ce que**
le cône de réception (5) présente une forme cylindrique sur sa partie arrière (6) et une forme partiellement conique sur la partie centrale, tandis que la partie avant est pourvue d'un dispositif de jonction destiné à la réception des outils d'usinage.

3. Machine de fraisage et de tournage selon les revendications 1) et 2),
**caractérisée en ce que**
le cône de réception (5) est fermement fixé, entre la partie centrale et frontale, à une plaque de base (11) munie d'au moins trois bras (22 ou 23) étendus vers l'extérieur et disposant de béquilles d'appui cylindriques (14 ou 15) sur la face arrière orientée vers la machine,

4. Machine de fraisage et de tournage selon les revendications 1) et 2),
**caractérisée en ce que**
la face frontale de la tête de fraisage (1), située sur le côté opposé par rapport aux béquilles d'appui (14 ou 15) du cône de réception (5), dispose d'au moins trois plaques de support (17 ou 18) qui entrent en contact avec les béquilles d'appui (14 ou 15) lors de l'introduction du cône de réception (5) dans la broche de travail (2).

5. Machine de fraisage et de tournage selon les revendications 1) et 4),
**caractérisée en ce que**
les béquilles d'appui (14) présentent une forme conique sur leur extrémité libre, tandis que les plaques de support (17) situées sur le côté opposé présentent un évidement (16) s'étendant coniquement vers l'intérieur, dans lequel vient s'insérer l'extrémité conique des béquilles d'appui (14) lors de la fixation du cône de réception (5),
et **en ce que** les béquilles d'appui (15), ainsi que les plaques de support (18) situées sur le côté opposé, présentent une surface plane au niveau de leur extrémité libre.

6. Machine de fraisage et de tournage selon les revendications 1), 2) et 3),
**caractérisée en ce que**
une bague à rainure conique (19) et une bague d'adaptation (20) placée sur le côté orienté vers la machine se trouvent dans la partie centrale du cône de réception (5), à une certaine distance par rapport à la plaque de base (11).

7. Machine de fraisage et de tournage selon les revendications 1) à 4) et 5),
**caractérisée en ce que**
l'épaisseur de la bague d'adaptation (20) et l'angle des cônes des béquilles d'appui (14) par rapport à leur axe sont adaptés de manière que, lors de l'insertion du cône de réception (5) dans la broche de travail (2), le contact entre les surfaces coniques des béquilles d'appui (14) et les évidements (16) des plaques de support (17), ainsi qu'entre les surfaces planes à l'extrémité des béquilles d'appui (15) et les plaques de support (18), se produit un peu avant le contact entre la bague d'adaptation (20) et la surface opposée de la broche de travail (2).

8. Machine de fraisage et de tournage selon les revendications 1) et 3),
**caractérisée en ce que** le cône de réception (5) dispose, au lieu de la plaque de base (11), d'une cloche de base (24) qui porte une bague dentée (26) à denture plane sur la surface arrière orientée vers la machine (25). La contre-denture (27) correspondante se trouve sur la surface opposée de la tête de fraisage (1).

9. Machine de fraisage et de tournage selon les revendications 1), 2) et 8), **caractérisée en ce que**
l'épaisseur de la bague d'adaptation (20) est adaptée à celle de la bague dentée (26) de manière à ce que le contact entre la denture plane de la bague dentée (26) et la tête de fraisage (27) soit établi avant l'entrée en contact de la bague d'adaptation (20) avec la surface opposée de la broche de travail (2).

10. Machine de fraisage et de tournage selon les revendications 1), 2) et 8),
**caractérisée en ce que**
la bague dentée (26) et la cloche de base (24) qui la porte présentent des perçages traversants (28) aux endroits où se trouvent les plaques de support (17) situées sur la surface frontale opposée de la tête de fraisage (1).

11. Machine de fraisage et de tournage selon les revendications précédentes,
**caractérisée en ce que**
le cône de réception (5) est percé en continu dans son axe longitudinal. Ledit perçage (21) est relié en continu, d'un côté, au perçage longitudinal de la broche de travail et, de l'autre, à des perçages aménagés au niveau de la jonction avec l'outil d'usinage.
